# EUROPEAN PATENT SPECIFICATION

(11) **EP 4 634 542 B1**
(45) Date of publication and mention of the grant of the patent: **28.10.2026**
(21) Application number: 23822262.4
(22) Date of filing: 07.12.2023
(51) Int. Cl.: F16D 3/41, F16D 3/84, F16D 7/02, F16D 3/38

(54) **UNIVERSAL JOINT WITH OIL-BATH CLUTCH TORQUE LIMITER AND DRIVE SHAFT COMPRISING SAID JOINT**
UNIVERSALGELENK MIT ÖLBADKUPPLUNGSDREHMOMENTBEGRENZER UND ANTRIEBSWELLE MIT DIESEM GELENK
JOINT UNIVERSEL AVEC LIMITEUR DE COUPLE D'EMBRAYAGE À BAIN D'HUILE ET ARBRE D'ENTRAÎNEMENT COMPRENANT LEDIT JOINT

(30) Priority: 12.12.2022 IT 202200025332
(43) Date of publication of application: 22.10.2025
(73) Proprietor: Bondioli & Pavesi S.p.A., 46029 Suzzara (MN) (IT)
(72) Inventor: BONDIOLI, Claudio, 46034 Borgo a Virgilio (MN) (IT)
(74) Representative: Mannucci, Michele
(86) International application number: PCT/EP2023/084794
(87) International publication number: WO 2024/126263

(56) References cited:
- EP-A1- 1 197 671
- WO-A1-2020/222210
- WO-A1-2021/259856
- JP-A- 2014 035 074
- JP-A- H02 159 418
- US-A- 2 872 794
- US-A1- 2003 153 388
- US-B1- 6 203 440

## Description

### TECHNICAL FIELD

The present invention relates to improvements to universal joints and drive shafts comprising one or more universal joints.

### BACKGROUND ART

Universal joints are used in multiple applications for the transmission of motion between two shafts or portions of shafts which can be inclined with respect to one another. Universal joints are often used in agricultural machinery, to transmit motion from a tractor or other motor unit to a driven machine. Universal joints are often combined with a drive shaft. The drive shaft may comprise a portion of a telescopic shaft, comprising two tubular components inserted into each other to slide telescopically, at the two ends of which two opposing universal joints are associated.

Often, to avoid damages to transmission components, or to machines connected by a universal shaft transmission, or in general including at least one universal joint, the universal joint includes a torque limiter, which interrupts the transmission of the driving torque when the torque transmitted exceeds a certain limit, for example due to a mechanical block of the driven machine. There are drive shafts that include universal joints having a clutch torque limiter. A known joint of this type includes a first yoke and a second yoke joined together by a spider. The joint further comprises a first hub coaxial to the first yoke and torsionally coupled thereto, and a second hub coaxial to the second yoke and torsionally coupled thereto. A clutch torque limiter is provided between one of said hubs and the respective yoke, typically comprising clutch discs torsionally constrained to the hub and clutch discs torsionally constrained to the yoke. When the torque exceeds a predetermined limit, the discs attached to the hub slip relative to the discs attached to the yoke, thus interrupting torque transmission. Clutch discs wear quickly due to mutual friction. The wear of the clutch discs leads to their thinning and consequently a reduction in the torque limit for which mutual slippage of the clutch discs occurs. This is because wear reduces the mutual force with which the friction discs are pushed against each other, and therefore reduces the friction force that transmits torque between hub and fork. US2872794, on which the preamble of claim 1 is based, discloses a friction disc clutch of the so-called automatic overload release type. WO2020/222210 discloses a cardan chaft with a system for checking the conditions of use thereof. WO2021/259856 discloses a protection system for a drive shaft including a universal joint. US6203440 discloses a protective booth for a driveline including a universal joint. JP201435074, EP1197671 disclose torque limiters for a universal joint. US2003/0153388 discloses a torque limiter for a wheel driving device. JP2159418 discloses a wet coupling for an engine.

### SUMMARY

Embodiments disclosed herein provide a universal joint according to claim 1 that overcomes or alleviates the drawbacks of universal joints with clutch torque limiter of the prior art. According to a further aspects, a system according to claim 15 and a drive shaft according to claim 18 comprising at least one universal joint with a clutch torque limiter are disclosed.

In summary, according to the invention a universal joint with a clutch torque limiter is provided, and in particular with a disc clutch, wherein the clutch is in an oil bath.

In this way, the wear of the clutch during slipping is substantially reduced and consequently the useful life of the joint is extended and the variations in the clutch intervention limit torque due to wear are reduced.

According to the invention, the universal joint is provided comprising a first yoke and a second yoke connected to each other by a spider. The universal joint also includes a hub coaxial to the first yoke and a torque limiter positioned between the hub and the first yoke. The torque limiter comprises a clutch contained in an oil-bath chamber.

Advantageous embodiments of the universal joint according to the invention are described below with reference to the accompanying drawings and are set forth in the dependent claims.

In some embodiments, the clutch in oil bath may be sensorized, for example it may comprise at least one temperature sensor, adapted to detect a temperature of the oil bath or the temperature of a part of the universal joint, which in turn is a function of the oil temperature. This allows the detection of anomalous oil overheating conditions, for example caused by the continuation of a clutch slipping condition for an excessive time. Every time the clutch slides, frictional heat is generated. If the clutch slides for too long, or with an excessive speed difference between yoke and hub, the heat generated by friction overheats the oil and this anomalous situation is detected and reported via the temperature sensor.

In some embodiments, a vibration sensor, or a speed sensor, may also be provided, configured to detect the presence of a mutual slipping movement between the hub and the yoke, i.e. a clutch slipping condition. A control unit may measure the time during which clutch slip occurs and, for example, report when clutch slip conditions persist for an excessive time. The vibration conditions of the universal joint 7, in fact, are altered in the event of slipping of the torque limiter clutch. The signal from the vibration sensor therefore allows detecting if and when the torque limiter intervenes with clutch slippage.

As described below, the sensor or sensors may be carried by the yoke and therefore participate in the rotation motion of the joint. In other embodiments one or both sensors may be fixed, i.e. stationary, where fixed or stationary means that they do not participate in the rotational motion of the joint. For example, the sensor(s) may be mounted on a protective hood, which at least partially surrounds the joint, or on a protective hood holder. This simplifies power supply of the sensor(s) and data collection. The temperature measurement may take place without contact, for example by means of an infrared system and the slipping condition may be detected by measuring the rotation speed of the hub and yoke, between which the clutch is placed, using a special sensor adapted to measure the relative speed.

### BRIEF DESCRIPTION OF THE DRAWINGS

The invention will be better understood by following the description and the accompanying drawings, which illustrate an exemplifying and non-limiting embodiment of the invention. More particularly, the drawings show:
Fig. 1 is a side view of a universal shaft, with a partial section of the protections of the rotating parts of the shaft;
Fig. 2 is a section along a plane containing the axis of the universal joint, of a yoke of one of the universal joints of the shaft of Fig. 1, including the torque limiting clutch;
Fig. 3 is an axonometric view of the yoke in Fig.2;
Fig. 4 is a schematic external view of a sensorized joint with sensors integral with the yoke;
Fig. 5 is a functional diagram of the sensors and control unit associated with the sensorized joint in Fig. 4;
Fig. 6 is an external and partial sectional view of a system comprising a sensorized joint, with a stationary protective hood, to which sensors are associated; and
Fig. 7 is a functional diagram of the sensors and control unit associated with the sensorized system in Fig. 6.

### DETAILED DESCRIPTION

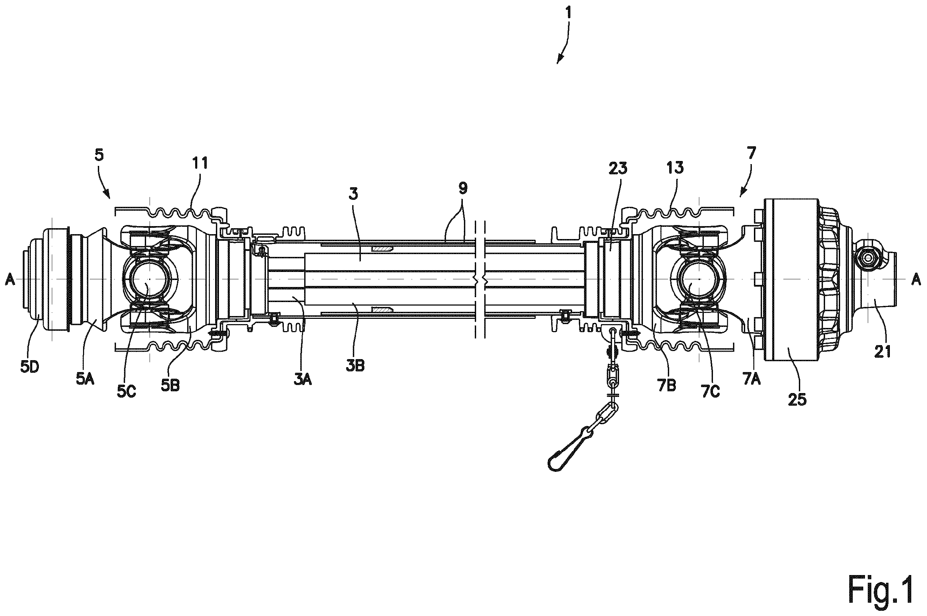

Fig. 1 shows a universal transmission generally indicated with reference number 1. The universal transmission 1 includes a telescopic shaft 3 with a first end and a second end. A-A indicates the rotation axis of the telescopic shaft 3. The telescopic shaft 3 includes two telescopic elements 3A, 3B sliding into each other to allow lengthening and shortening of the telescopic shaft 3 and therefore of the universal transmission 1.

A first universal joint 5 is associated with the first end of the telescopic shaft 3 and a second universal joint 7 is associated with the second end of the telescopic shaft 3. Reference numeral 9 indicates a telescopically extendable protection which surrounds the telescopic shaft 3, while 11 and 13 indicate end protections that at least partially protect the universal joints 5 and 7.

One of the two universal joints 5 and 7 may be made in the traditional way and be without a torque limiter. In the illustrated example, the first universal joint 5 has no torque limiter, while the universal joint 7 is provided with a torque limiter described in detail below.

Reference numerals 5A and 5B indicate two yokes of the universal joint 5, joined together by a spider 5C. Reference number 5D indicates a connection hub to a driving machine or a driven machine, for example to the power take-off of a tractor, not shown.

The universal joint 7 includes a yoke 7A, rotatably, i.e. torsionally constrained to a hub 21, and a yoke 7B integral with a hub 23. The latter is mechanically constrained to the tubular element 3B of the telescopic shaft 3. Reference numeral 7C indicates a spider connecting yoke 7A and yoke 7B to one another.

The yoke 7A is provided with a clutch torque limiter generally indicated with 25, and more particularly a torque limiter comprising a disc clutch, which limits the torque transmitted by the yoke 7A to the hub 21. In particular, the torque limiter 25 is calibrated in such a way that, when the torque between the yoke 7A and the hub 21 exceeds a threshold value, the clutch starts to slip, preventing power transmission, while when the torque is lower than the threshold value, the hub 21 is rotationally, i.e. torsionally, constrained to the yoke 7A and rotates with it.

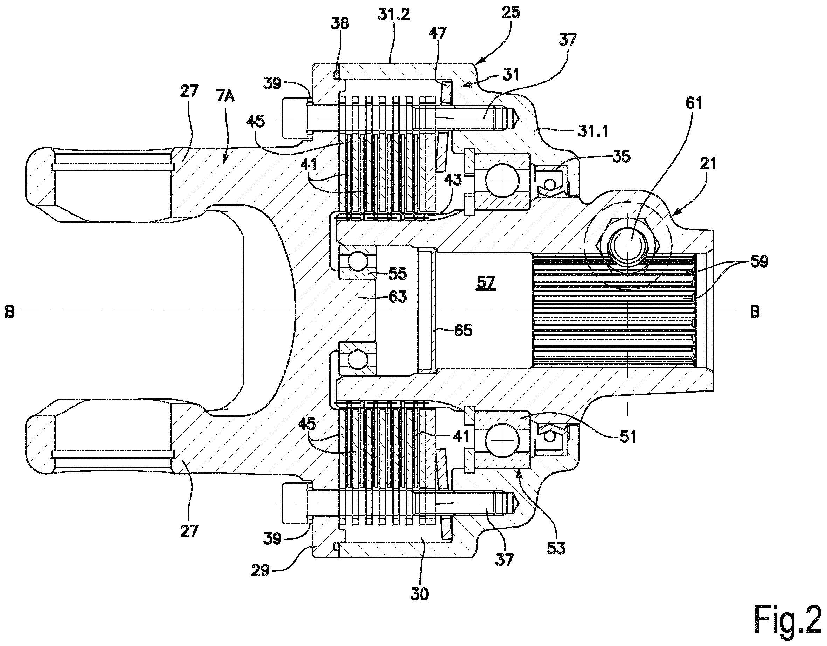

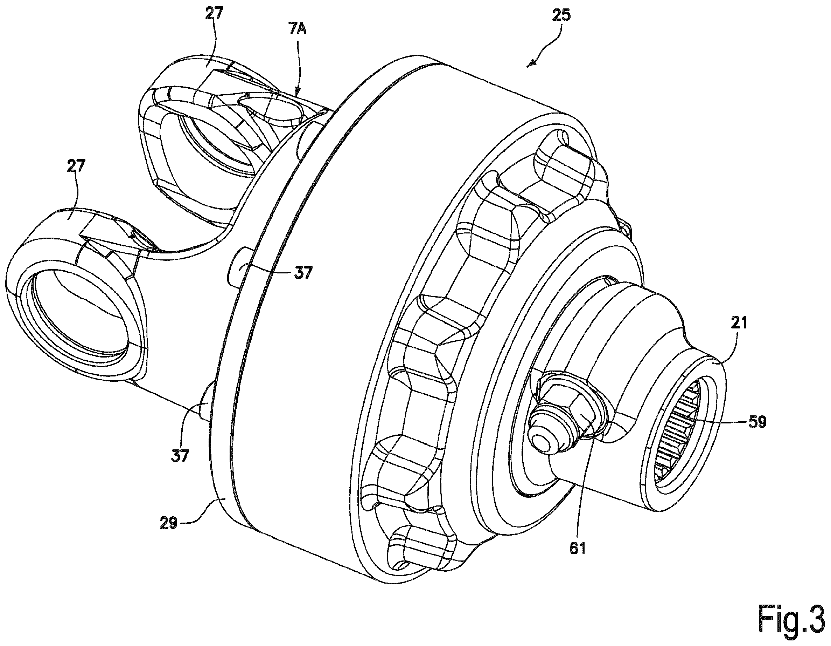

The structure of the yoke 7A, the hub 21 and the respective clutch torque limiter 25 is illustrated in detail in Figs. 2 and 3.

The yoke 7A includes two arms 27, which engage with the respective coaxial pins of the spider 7C. In the illustrated embodiment, the two arms 27 are integral with a closing flange 29 of an oil-bath chamber 30, delimited by the closing flange 29 and by a closing body 31.

In some embodiments, the closing body 31 includes a bottom wall 31.1 and a perimeter wall 31.2, surrounding the axis B-B of the yoke 7, coinciding with the axis of the hub 21. In some embodiments, the bottom wall 31.1 is perforated to allow the passage of the hub 21. Reference numeral 35 indicates a seal surrounding the hub 21 to prevent oil from leaking from the oil-bath chamber 30. A gasket, for example an O-ring, shown at 36 may be interposed between the closing flange 29 and the closing body 31.

In some embodiments, the closing body 31 is connected to the closing flange 29 by means of screws 37, which may pass through through holes made in the closing flange and engage in threaded blind holes of the closing body 31. Reference numeral 37 indicates screws which connect the closing flange 29 to the closing body 31. Sealing washers 39 may be inserted between the head of each screw 37 and the flange.

The clutch members of the clutch torque limiter 25 are housed inside the oil-bath chamber 30. In the illustrated embodiment, the clutch members comprise a series of first clutch discs 41, torsionally constrained to the hub 21. In the illustrated embodiment, the first clutch discs 41 are torsionally constrained to the hub 21 by means of a splined profile 43. Between each pair of adjacent first clutch discs 41 there are inserted second clutch discs 45 of a series of second clutch discs, torsionally constrained to the yoke 7. The second clutch discs 45 may be coupled to the yoke by means of the screws 37. For this purpose, each second clutch disc 45 may have a series of holes parallel to the axis B-B, through each of which a respective screw 37 extends.

An elastic member 47 presses the first clutch discs 41 and the second clutch discs 45 against one another. In the illustrated embodiment, the elastic member 47 includes a Belleville spring coaxial with the hub 21 and the discs 41, 45.

The elastic member 47 is calibrated in such a way that a torque is transmitted between the yoke 7A and the hub 21 via the static friction generated between the first clutch discs 41 and the second clutch discs 45, until the transmitted torque reaches a threshold value, at which the torque limiter 25 intervenes by sliding the first clutch discs 41 relative to the second clutch discs 45. The threshold value of the transmissible torque may be determined by selecting an appropriate size (thickness) and an appropriate number of clutch discs and by selecting the appropriate Belleville spring 47.

The first clutch discs 41 and the second clutch discs 45 are immersed in an oil bath contained in the oil-bath chamber 30, such that the mutual sliding between the first clutch discs 41 and the second clutch discs 45 causes limited and almost negligible wear of the clutch discs. This allows the overall thickness of the clutch discs 41, 45 to be kept approximately constant, even for a prolonged intervention time of the torque limiter 25. This results into a constancy of the force exerted by the Belleville spring 47 and therefore in maintaining the calibration of the torque limiter 25.

In some embodiments, as illustrated in the accompanying drawing, to facilitate the rotation of the hub 21 inside the oil-bath chamber 30 when the torque limiter clutch 25 slips, it is advantageous to provide an arrangement of bearings between the hub 21 and the components that delimit the oil-bath chamber 21, in particular the closing body 31 and the closing flange 29.

In some embodiments, the bearing arrangement includes a first bearing 51, coaxial to the axis B-B and interposed between the closing body 31 and the hub 21. In the illustrated embodiment, the first bearing 51 is a ball bearing, but the possibility of using other types of bearings, both rolling bearings and (in less advantageous forms) sliding bearings, is not excluded.

In embodiments, the first bearing 51 is housed in a seat 53 of the closing body 31, between the oil-bath chamber 31 and the seal 35.

In advantageous embodiments, the hub 21 is supported with respect to the yoke 7A via a second bearing 55, coaxial to the axis B-B. In the illustrated embodiment, the second bearing 55 is a rolling ball bearing, but the possibility of using a rolling bearing of another type, or possibly even a plain bearing, is not excluded.

In the illustrated embodiment, the second bearing 55 is housed in a hole 57 of the hub 21. In particular, in the embodiment illustrated, hole 57 is a through hole, to facilitate machining of the hub 21 and reduce the weight thereof. An internal splined profile 59 is also formed in the through hole 57 to couple the hub 21 to a power take-off, for example of a driven machine. Reference numeral 61 indicates a transverse pin for mutual coupling between the internal splined profile 59 and an external splined profile of a power take-off, not shown.

In the illustrated embodiment, the internal ring of the bearing 55 is connected to a pin 63 integral with the flange 29, for example made integral with it, and protruding from the flange 21 on the opposite side with respect to the arms 27.

To avoid oil leakage from the oil-bath chamber 30 towards the through hole 57, and therefore outside the universal joint 7, in advantageous embodiments a plug 65 is arranged inside the through hole 57, placed between the second bearing 55 and the internal splined profile 59.

In advantageous embodiments, the clutch torque limiter 25 may be provided with a temperature sensor adapted to detect the temperature of the oil inside the oil-bath chamber 30. See for more details the description below. The temperature sensor may be associated with a control system that limits clutch slippage when the oil temperature rises above a first threshold value, to avoid damage to the clutch components. For example, when the detected temperature reaches the threshold value, the signal generated by the sensor and detected by a central unit may cause the stopping of the driving machine connected to the drive shaft 1, avoiding the occurrence of clutch slipping situations, until the temperature of the oil inside the oil-bath chamber 30 drops below a second threshold value, lower than the first threshold value.

The oil bath clutch allows the drawbacks of current torque limiters that work dry to be overcome.

The performance of the universal joint with oil bath clutch may be further improved by providing a sensor system associated with the universal joint 5. The sensor system may comprise a single sensor or an array of sensors. In some embodiments, one or more temperature sensors are provided to directly detect the temperature of the oil bath contained in the oil-bath chamber 30, as mentioned above, or the temperature of a portion of the universal joint 5 which is a function of the temperature of the oil bath. Through this sensor, for example, it is possible to communicate to the operator of a machine, which includes the universal joint, that an anomalous condition has occurred, which has led to excessive heating of the oil bath. As mentioned, this may occur for example if the clutch slips for an excessive time, or if the relative speed between the yoke 7A and the hub 21 is too high, or if the clutch slips too frequently.

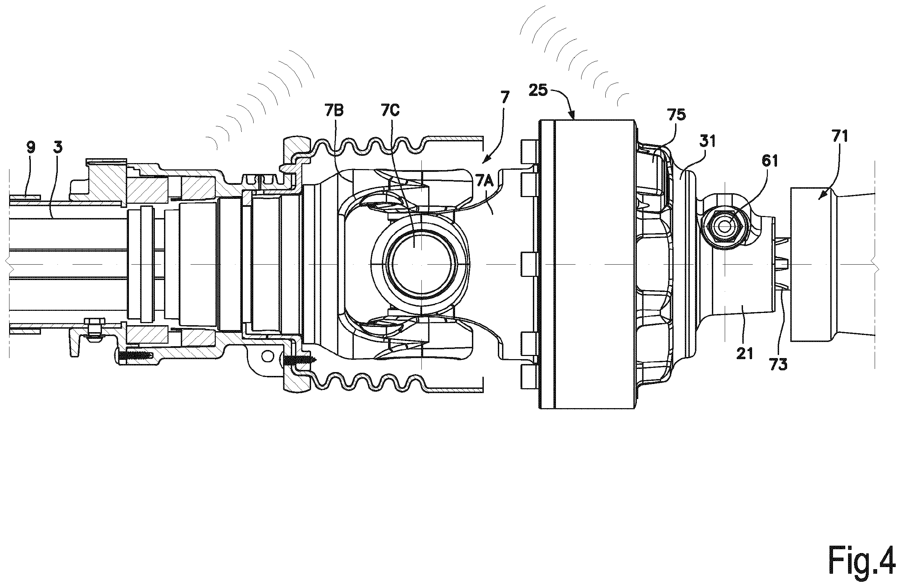

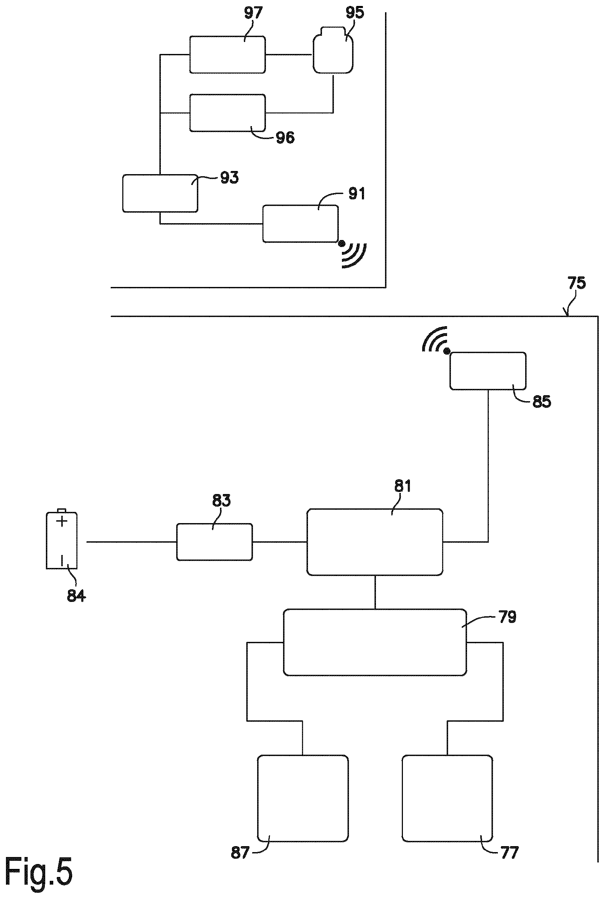

A first embodiment of a joint with a temperature sensor is shown in Figs. 4 and 5. In particular, Fig. 4 shows a side view of a universal joint 7 applied to one end of a telescopic shaft 3 of a drive shaft 1. The universal joint 7 may be configured as described with reference to Figs. 1 to 3. Also shown in Fig. 4 is a power take-off 71, for example of a tractor, which includes a splined shaft 73 engaged in the internal splined profile 59 (see Fig. 2).

A temperature sensor is applied to the universal joint 7 in a suitable position. In the embodiment illustrated in Fig. 4, the temperature sensor is embedded in a resin case applied to the torque limiter 25 and more particularly, in the illustrated case, to the external surface of the closing body 31. The protective casing containing the temperature sensor is indicated with 75. The protective casing leaves the active part of the sensor in direct contact with the external surface of the closing body 31.

With this arrangement, the temperature sensor is adapted to detect the temperature of the surface of the closing body 31, inside which there is the oil bath in which the torque limiter clutch 25 is immersed.

Fig. 5 shows a functional block diagram of the components of the joint sensing device.

Since the temperature sensor is located on board the universal joint 7 and rotates integrally therewith, the detected signal must be transmitted to a receiving device that allows the use thereof, for example for signalling the temperature through a man-machine interface, or interfaced with an alarm system, to allow an operator of the machine on which the universal joint 7 is mounted to intervene in the event of overheating of the oil bath, and possibly also to obtain statistical data on the operation of the clutch.

The polymer resin casing contains in particular a microcontroller electronic board, a radio module with an appropriate frequency, for example 2.4 GHz, and a power source, for example battery and/or "energy harvesting" technology, which guarantees an appropriate duration, for example approximately 3 years.

In Fig. 5 the following components housed in the casing 75 are shown schematically: a temperature sensor 77, a signal conditioning circuit 79, a micro-controller processing system 81, a power supply 83, a battery 84 and a radio module 85.

The diagram of Fig. 5 also shows a further sensor 87 adapted to detect a parameter indicative of a slipping condition of the clutch of the torque limiter 25. In some embodiments this sensor 87 may be a vibration sensor, such as a one-, two-, or three-axis accelerometer. The signal from the vibration sensor 87 is useful for detecting and reporting a slipping condition of the torque limiter clutch 25.

The signals detected by the sensor(s) 77, 87 are transmitted via radio from the radio module 85 to a radio module 91 which may be mounted on a stationary structure with respect to the machine on which the universal joint 7 is located. The radio module 91 is interfaced to a microcontroller 93 and to a data line via a transceiver module 96. Reference numeral 97 indicates the power supply of the electronic components 91, 93, 96 and 95 indicates a connector. In the latter, in addition to the data line, the power supply from the outside may also be brought, so that the modules 96, 93 and 91 are powered through the power supply 97.

In order to reduce energy consumption, data transmission may be activated only when necessary, i.e. for example only when the temperature sensor detects a temperature above a threshold value. In this case, the radio transmission module 85 is activated, which otherwise remains in standby, with a consequent reduction in energy consumption. The sensor may also be kept on standby and activated only under certain conditions, to reduce energy consumption

As mentioned, in a particularly advantageous embodiment, the temperature sensor 77 is in contact with the external surface of the closing body 31 or another part of the sensor. For this purpose, to mount the sensor it is sufficient that the external surface is adequately flattened to ensure correct contact of the sensitive element of the sensor. In other embodiments, the sensor may be configured to directly sense the temperature of the oil in the oil-bath chamber 30. In this case, the closing body 31, or other part of the casing, in which the clutch is contained, may be apertured to allow the passage of the sensor contacts and bring the sensitive element inside the oil-bath chamber 30.

In some embodiments, the sensor associated with the joint 7 may be combined with a further sensor or group of sensors associated with the drive shaft and used to detect other useful parameters. An example of a drive shaft with on-board sensors is disclosed in WO-A-2020/222210. These sensors may be used to detect, for example, the rotation speed of the drive shaft, the transmitted torque, vibrations, the inclination angle of the joints, the temperature and more. The temperature sensor 77 and/or the vibration sensor 87 may share some of the electronic devices associated with the drive shaft, both for power and data transmission.

In the embodiment described with reference to Figs. 4 and 5, the sensor or sensors associated with the universal joint 7 are fixed to the joint itself and rotate therewith. This is advantageous from the point of view of data precision and sensor simplicity, but involves the need for an electrical power supply on board the joint and the need for radio data transmission.

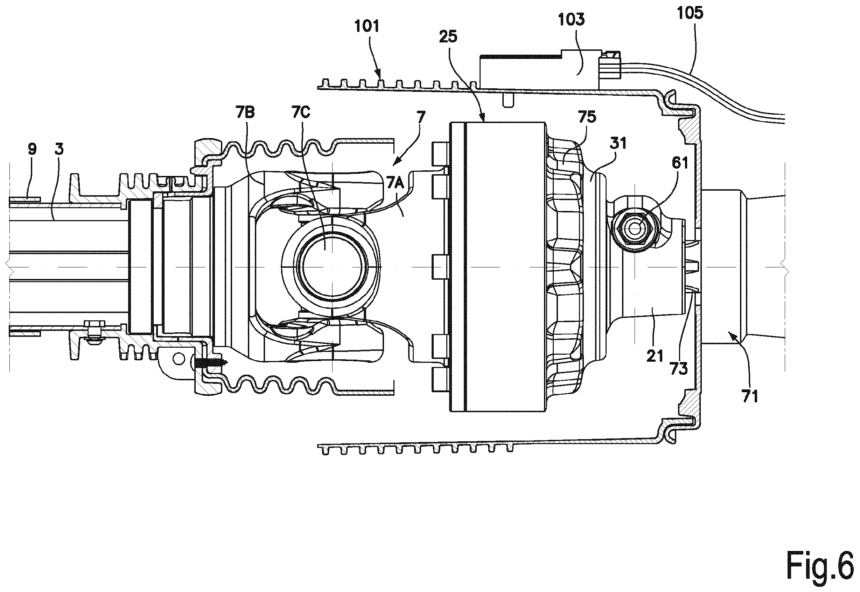

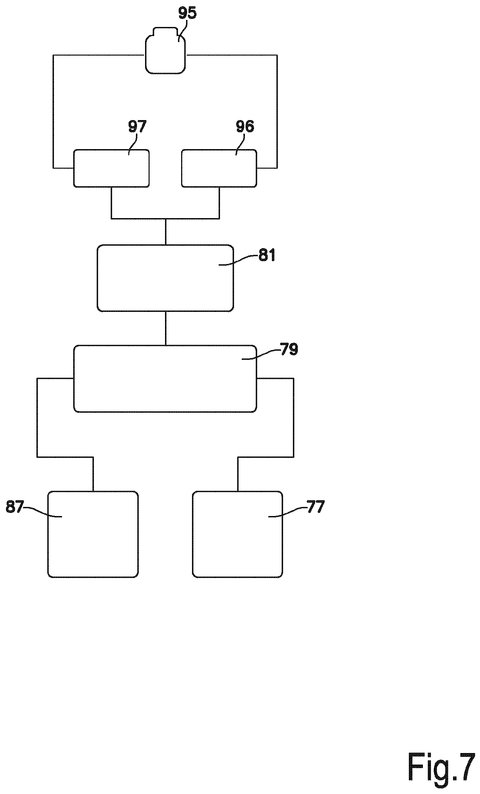

Alternatively, the sensor or sensors dedicated to the universal joint 7 may be arranged in a stationary position with respect to the machine on which the joint is mounted, i.e. in a non-rotating position. An embodiment of this type is schematically shown in Figs. 6 and 7. In this embodiment, the universal joint 7 is associated with a protective hood 101 for anti-accident protection. The protective hood 101 is stationary, in the sense that it may be fixed for example with respect to a vehicle to which the power take-off 71 belongs.

A casing 103 may be mounted on the protective hood 101, inside which the temperature sensor and possibly a slip detection sensor are housed. The temperature sensor, again indicated with 77 in the functional block diagram of Fig. 7, described below, may be an infrared sensor, of which the sensitive element is indicated in Fig. 6 with 107. This faces for example towards the closing body 31 of the torque limiter 25, so as to detect the temperature of the external surface of the closing body. The temperature sensor and related electronics may be powered via a wired connection 105, which also provides data transmission.

The protective hood 101 may have a special cut-out into which the sensitive element 107 of the temperature sensor 77 faces, so as to correctly read the surface temperature of the closing body 31 or other part of the torque limiter, the temperature whereof is a function of the temperature of the oil contained in the oil-bath chamber 30.

A sensor capable of providing information on the sliding conditions of the clutch of the torque limiter 25 may be housed in the same casing 103. This sensor, again indicated with 87 in Fig.7, may be a sensor adapted to detect the number of revolutions. The sensor 87 may for example detect the number of revolutions of the hub 21 and the number of revolutions of the yoke 7A and therefore of the closing body 31 of the torque limiter 25. The difference in the number of revolutions of the hub 21 and the closing body 31 indicates the slippage of the clutch. If the number of revolutions of the shaft 73 is provided by another sensor on board the machine on which the universal joint 7 is mounted, the sensor 87 may be configured to read the number of revolutions of an element downstream of the clutch only, for example of the closing body 31 or the yoke 7A.

The block diagram in Fig. 7 briefly illustrates the components of the sensor system in the configuration of Fig. 6. Same numbers indicate parts identical or equivalent to those illustrated in Fig. 5 and described above. In particular, in the diagram of Fig. 7 the radio modules and the autonomous power supply of the sensors are missing, since these are connected to the power supply 97 on board the machine. The micro-controller processing system 81 is connected by cable to the transceiver module 96 and the power supply 97.

The objective of all embodiments described with reference to Figs. 4 to 7 is to generate an alarm or notification that warns the operator of the machine, on which the universal joint 7 is mounted, of any slippage which, if prolonged over time, could raise the temperature of the clutch to values that may cause damage.

Through this signal the operator may promptly change the working parameters on board the machine, for example a tractor in order to prevent damage to the clutch. For example, the operator may reduce the rotation speed of the motor, disconnect the power take-off, or reduce the forward speed of the tractor.

The alarm or notification may be transmitted to the operator for example via a display in the driver's cab, or via another display connected to a CAN BUS network, or even on a mobile device, such as a smartphone or tablet. Alternatively, or in combination, a light signal via special lights, or a sound signal may be provided

In some embodiments, an alarm signal generated by the detection of the sensors described above could also cause a direct and automatic intervention on the controls of the machine (tractor or other) on which the universal joint 7 is located, with modification of the operating parameters of the machine itself.

All the solutions described may include connectivity systems based on Blue-tooth, NFC or similar technology.

If the operating conditions do not allow the implementation of the functions described above on board the sensor control unit, the same functions may be performed by a remote device.

Connectivity systems may allow multiple functions such as real-time verification of operating parameters, notification of any alarm situations, faults or malfunctions of the device in general.

Through a remote telemetry control unit it is also possible to store the parameters of the torque limiter or any other component on the cloud so as to populate a database of historical data for post-processing, statistical analysis or other purposes.

All the functions described above may be combined with the functions provided in a drive shaft of the type described in WO2020/222210.

## Claims

1. A universal joint (7) comprising:
a first yoke (7A);
a second yoke (7B);
a spider (7C) connecting the first yoke (7A) and the second yoke (7B);
a hub (21) coaxial to the first yoke (7A);
a torque limiter (25) interposed between the hub (21) and the first yoke (7A),
wherein said torque limiter (25) comprises a clutch contained in a chamber (30); wherein the first yoke (7A) is integral with a closing flange (29) of the chamber (30); wherein the chamber (30) is closed, on a side opposite the closing flange (29), by a closing body (31) through which the hub (21) extends;
wherein the clutch comprises: a series of first clutch discs (41) torsionally connected to the hub (21), a series of second clutch discs (45) torsionally connected to the first yoke (7A), and at least one elastic member (47) which presses the first clutch discs (41) and the second clutch discs (45) against one another; wherein the first clutch discs (41) and the second clutch discs (45) are interspersed with one another; and wherein the hub (21) is supported in the chamber (30) by means of a first bearing (51) and a second bearing (55), and
**characterised in that**,
the chamber is an oil-bath chamber (30) and the first clutch discs (41) and the second clutch discs (45) are dipped in the oil bath.

2. The universal joint (7) of claim 1, wherein the first bearing (51) is interposed between the closing body (31) and the hub (21); and wherein the second bearing (55) supports the hub (21) with respect to the first yoke (7A).

3. The universal joint (7) of claim 1 or 2, wherein the first clutch discs (41) are connected with the hub (21) by means of a splined profile (43).

4. The universal joint (7) of one or more of the preceding claims, wherein the first bearing (51) and the second bearing (55) are rolling bearings.

5. The universal joint (7) of one or more of the preceding claims, wherein the first bearing (51) is located outside the hub (21) and housed in a seat (53) in the closing body (31).

6. The universal joint (7) of claim 5, wherein the second bearing (55) is housed in an axial hole (57) of the hub (21) and engaged with a pivot (63) integral with the first yoke (7a), extending into the hub (21).

7. The universal joint (7) of claim 6, wherein the axial hole (57) is a through hole; wherein preferably a closing plug (65) is arranged in the axial hole (57) and positioned between the second bearing (55) and a distal end of the hub (21) opposite to the first yoke (7A), said distal end forming a mechanical coupling (59) with a power take-off; wherein the mechanical coupling preferably comprises a splined profile (59).

8. The universal joint (7) of one or more of the preceding claims, wherein the closing body (31) comprises:
a bottom wall (31.1), opposite the first yoke (7A), wherein the hub extends (21) through the bottom wall (31.1); and
an annular perimeter wall (31.2), surrounding the oil-bath chamber (30), coaxial with the hub (21) and sealingly connected to the closing flange (29).

9. The universal joint (7) of one or more of the preceding claims, wherein the closing flange (29) and the closing body (31) are joined to one another by a plurality of screws (37), preferably associated with sealing washers (39).

10. The universal joint (7) of one or more of the preceding claims, wherein the oil-bath chamber (30) is sealingly closed by a sealing gasket (36) housed in a seat of the closing body (31) and surrounding the hub (21).

11. The universal joint (7) of one or more of the preceding claims, wherein the hub (21) comprises a splined profile (59) forming a torsional coupling with a power take-off, a locking member (61) being provided to couple the splined profile to a power take-off.

12. The universal joint (7) of one or more of the preceding claims, comprising a temperature sensor (77).

13. The universal joint (7) of claim 12, wherein the temperature sensor (77) is applied to the outside of the oil-bath chamber (30) and is adapted to measure the temperature of a wall delimiting the oil-bath chamber (30), wherein preferably the temperature sensor (77) is either a sensor adapted to measure the temperature of the wall delimiting the oil-bath chamber (30) without contact, or it is in contact with the wall delimiting the oil-bath chamber (30), or with the oil contained in the oil-bath chamber (30).

14. The universal joint (7) of one or more of the preceding claims, comprising a vibration sensor (87), or a sensor of the relative rotation between the hub and the first yoke (7A); wherein preferably the vibration sensor (87) is integral with a component of the universal joint (7), in particular with the first yoke (7A); and wherein preferably the relative rotation sensor is adapted to measure the relative speed between the hub (21) and the first yoke (7A).

15. A system comprising a universal joint (7) according to one or more of the preceding claims and a protective hood (13) for the universal joint (7), adapted to be fixed to a stationary component.

16. The system of claim 15, comprising a temperature sensor (77) fixed to the protective hood (13) and adapted to measure the temperature of a wall of the universal joint (7) without contact, preferably an infra-red sensor.

17. The system of claim 15 or 16, comprising a speed sensor fixed to the protective hood (13) and adapted to detect a difference in rotation speed between the hub (21) and the first yoke (7A).

18. A drive shaft (1) comprising:
- a telescopic shaft (3) with a first end and a second end;
- a first universal joint (5) associated with the first end of the telescopic shaft (3); and
- a second universal joint (7) associated with the second end of the telescopic shaft;
wherein one of said first universal joint (5) and second universal joint (7) is a universal joint according to one or more of claims 1 to 14.

19. The drive shaft (1) of claim 18, wherein the second yoke (7B) is torsionally connected to the telescopic shaft (3) and the hub (21) forms a coupling for a power take-off.

## Patentansprüche

1. Ein Kreuzgelenk (7), umfassend:
- ein erstes Joch (7A);
- ein zweites Joch (7B);
- eine Kreuzstückbaugruppe (7C), die das erste Joch (7A) und das zweite Joch (7B) verbindet;
- eine Nabe (21), die koaxial zum ersten Joch (7A) angeordnet ist;
- einen Drehmomentbegrenzer (25), der zwischen der Nabe (21) und dem ersten Joch (7A) angeordnet ist, wobei der Drehmomentbegrenzer (25) eine in einer Kammer (30) enthaltene Kupplung umfasst; wobei das erste Joch (7A) einstückig mit einem Verschlussflansch (29) der Kammer (30) ausgebildet ist; wobei die Kammer (30) an der gegenüberliegenden Seite vom Verschlussflansch (29) durch einen Verschlusskörper (31) verschlossen ist, durch den sich die Nabe (21) erstreckt;
wobei die Kupplung umfasst: eine Reihe von ersten Kupplungsscheiben (41), die drehfest mit der Nabe (21) verbunden sind, eine Reihe von zweiten Kupplungsscheiben (45), die drehfest mit dem ersten Joch (7A) verbunden sind, und mindestens ein elastisches Element (47), das die ersten Kupplungsscheiben (41) und die zweiten Kupplungsscheiben (45) gegeneinander drückt; wobei die ersten Kupplungsscheiben (41) und die zweiten Kupplungsscheiben (45) abwechselnd angeordnet sind; und
wobei die Nabe (21) in der Kammer (30) mittels eines ersten Lagers (51) und eines zweiten Lagers (55) gelagert ist, und
**dadurch gekennzeichnet, dass**
die Kammer eine Ölbadkammer (30) ist und die ersten Kupplungsscheiben (41) sowie die zweiten Kupplungsscheiben (45) in das Ölbad eingetaucht sind.

2. Kreuzgelenk (7) gemäß Anspruch 1, wobei das erste Lager (51) zwischen dem Verschlusskörper (31) und der Nabe (21) angeordnet ist; und wobei das zweite Lager (55) die Nabe (21) gegenüber dem ersten Joch (7A) lagert.

3. Kreuzgelenk (7) gemäß Anspruch 1 oder 2, wobei die ersten Kupplungsscheiben (41) mittels eines Keilprofils (43) mit der Nabe (21) verbunden sind.

4. Kreuzgelenk (7) gemäß einem oder mehreren der vorangegangenen Ansprüche, wobei das erste Lager (51) und das zweite Lager (55) Wälzlager sind.

5. Kreuzgelenk (7) gemäß einem oder mehreren der vorangegangenen Ansprüche, wobei das erste Lager (51) außerhalb der Nabe (21) angeordnet und in einem Sitz (53) im Verschlusskörper (31) aufgenommen wird.

6. Kreuzgelenk (7) gemäß Anspruch 5, wobei das zweite Lager (55) in einer axialen Bohrung (57) der Nabe (21) aufgenommen ist und mit einem Drehzapfen (63) in Eingriff steht, der einstückig mit dem ersten Joch (7A) ausgebildet ist und sich in die Nabe (21) erstreckt.

7. Kreuzgelenk (7) gemäß Anspruch 6, wobei die axiale Bohrung (57) eine Durchgangsbohrung ist; wobei vorzugsweise ein Verschlussstopfen (65) in der axialen Bohrung (57) angeordnet und zwischen dem zweiten Lager (55) und einem distalen Ende der Nabe (21) gegenüber dem ersten Joch (7A) liegt, wobei das distale Ende eine mechanische Kupplung (59) mit einer Zapfwelle bildet; wobei die mechanische Kupplung vorzugsweise ein Keilprofil (59) umfasst.

8. Kreuzgelenk (7) gemäß einem oder mehreren der vorangegangenen Ansprüche, wobei der Verschlusskörper (31) umfasst:
- eine dem ersten Joch (7A) gegenüberliegende Bodenwand (31.1), wobei sich die Nabe (21) durch die Bodenwand (31.1) erstreckt; und
- eine ringförmige Umfangswand (31.2), die die Ölbadkammer (30) umgibt, koaxial zur Nabe (21) ist und dichtend mit dem Verschlussflansch (29) verbunden ist.

9. Kreuzgelenk (7) gemäß einem oder mehreren der vorangegangenen Ansprüche, wobei der Verschlussflansch (29) und der Verschlusskörper (31) durch eine Vielzahl von Schrauben (37), vorzugsweise in Verbindung mit Dichtungsscheiben (39), miteinander verbunden sind.

10. Kreuzgelenk (7) gemäß einem oder mehreren der vorangegangenen Ansprüche, wobei die Ölbadkammer (30) durch eine Dichtungsmanschette (36) dicht verschlossen ist, die in einer Aufnahme des Verschlusskörpers (31) aufgenommen ist und die Nabe (21) umgibt.

11. Kreuzgelenk (7) gemäß einem oder mehreren der vorangegangenen Ansprüche, wobei die Nabe (21) ein Keilprofil (59) umfasst, das eine Torsionskupplung mit einer Zapfwelle bildet, wobei ein Verriegelungselement (61) zur Kopplung des Keilprofils mit einer Zapfwelle bereitgestellt wird.

12. Kreuzgelenk (7) gemäß einem oder mehreren der vorangegangenen Ansprüche, das einen Temperatursensor (77) umfasst.

13. Kreuzgelenk (7) gemäß Anspruch 12, wobei der Temperatursensor (77) an der Außenseite der Ölbadkammer (30) angebracht ist und dazu ausgebildet ist, die Temperatur einer die Ölbadkammer begrenzenden Wand (30) zu messen, wobei der Temperatursensor (77) vorzugsweise entweder ein Sensor ist, der dazu ausgebildet ist, die Temperatur der die Ölbadkammer (30) begrenzenden Wand berührungslos zu messen, oder er mit der die Ölbadkammer (30) begrenzenden Wand oder mit dem in der Ölbadkammer (30) enthaltenen Öl in Kontakt steht.

14. Kreuzgelenk (7) gemäß einem oder mehreren der vorangegangenen Ansprüche, umfassend einen Schwingungssensor (87) oder einen Sensor zur Erfassung der relativen Drehung zwischen der Nabe und dem ersten Joch (7A); wobei der Schwingungssensor (87) vorzugsweise einstückig mit einem Bauteil des Kreuzgelenks (7), insbesondere mit dem ersten Joch (7A), ausgebildet ist; und wobei der Sensor für die relative Drehung vorzugsweise dazu ausgebildet ist, die relative Geschwindigkeit zwischen der Nabe (21) und dem ersten Joch (7A) zu messen.

15. System, umfassend ein Kreuzgelenk (7) gemäß einem oder mehreren der vorangegangenen Ansprüche und eine Schutzhaube (13) für das Kreuzgelenk (7), die dazu ausgebildet ist, an einer stationären Komponente befestigt zu werden.

16. System gemäß Anspruch 15, umfassend einen an der Schutzhaube (13) befestigten Temperatursensor (77), der dazu ausgebildet ist, die Temperatur einer Wand des Gelenks (7) berührungslos zu messen, vorzugsweise einen Infrarotsensor.

17. System gemäß Anspruch 15 oder 16, umfassend einen an der Schutzhaube (13) befestigten Geschwindigkeitssensor, der ausgebildet ist, eine Differenz in der Drehzahl zwischen der Nabe (21) und dem ersten Joch (7A) zu erfassen.

18. Antriebswelle (1), umfassend:
- eine Teleskopwelle (3) mit einem ersten Ende und einem zweiten Ende;
- ein erstes Kreuzgelenk (5), das dem ersten Ende der Teleskopwelle (3) zugeordnet ist; und
- ein zweites Kreuzgelenk (7), das dem zweiten Ende der Teleskopwelle zugeordnet ist; wobei das erste Kreuzgelenk (5) oder das zweite Kreuzgelenk (7) ein Kreuzgelenk gemäß einem oder mehreren der Ansprüche 1 bis 14 ist.

19. Antriebswelle (1) gemäß Anspruch 18, wobei das zweite Joch (7B) drehfest mit der Teleskopwelle (3) verbunden ist und die Nabe (21) eine Kupplung für eine Zapfwelle bildet.

## Revendications

1. Un joint universel (7) comprenant :
une première fourche (7A) ;
une deuxième fourche (7B) ;
un croisillon (7C) connectant la première fourche (7A) et la deuxième fourche (7B) ;
un moyeu (21) coaxial à la première fourche (7A) ;
un limiteur de couple (25) interposé entre le moyeu (21) et la première fourche (7A), ledit limiteur de couple (25) comprenant un embrayage contenu dans une chambre (30) ; la première fourche (7A) étant d'un seul tenant avec une bride de fermeture (29) de la chambre (30) ; la chambre (30) étant fermée, d'un côté opposé à la bride de fermeture (29), par un corps de fermeture (31) à travers lequel le moyeu (21) s'étend ;
l'embrayage comprenant : une série de premiers disques d'embrayage (41) connectés en torsion au moyeu (21), une série de deuxième disques d'embrayage (45) connectés en torsion à la première fourche (7A), et au moins un organe élastique (47) qui presse les premiers disques d'embrayage (41) et les deuxièmes disques d'embrayage (45) les uns contre les autres ; les premiers disques d'embrayage (41) et les deuxièmes disques d'embrayage (45) étant entremêlés les uns avec les autres ; et le moyeu (21) étant supporté dans la chambre (30) au moyen d'un premier roulement (51) et d'un deuxième roulement (55),
**caractérisé en ce que**
la chambre est une chambre à bain d'huile (30) et les premiers disques d'embrayage (41) et les deuxièmes disques d'embrayage (45) sont plongés dans le bain d'huile.

2. Le joint universel (7) selon la revendication 1, dans lequel le premier roulement (51) est interposé entre le corps de fermeture (31) et le moyeu (21) ; et dans lequel le deuxième roulement (55) supporte le moyeu (21) par rapport à la première fourche (7A).

3. Le joint universel (7) selon la revendication 1 ou 2, dans lequel les premiers disques d'embrayage (41) sont connectés au moyeu (21) au moyen d'un profil cannelé (43).

4. Le joint universel (7) selon l'une ou plusieurs des revendications précédentes, dans lequel le premier roulement (51) et le deuxième roulement (55) sont des roulements à rouleaux.

5. Le joint universel (7) selon l'une ou plusieurs des revendications précédentes, dans lequel le premier roulement (51) est situé à l'extérieur du moyeu (21) et logé dans un logement (53) dans le corps de fermeture (31).

6. Le joint universel (7) selon la revendication 5, dans lequel le deuxième roulement (55) est logé dans un trou axial (57) du moyeu (21) et en prise avec un pivot (63) d'un seul tenant avec la première fourche (7a), s'étendant dans le moyeu (21).

7. Le joint universel (7) selon la revendication 6, dans lequel le trou axial (57) est un trou traversant ; un bouchon de fermeture (65) étant de préférence agencé dans le trou axial (57) et positionné entre le deuxième roulement (55) et une extrémité distale du moyeu (21) opposée à la première fourche (7A), ladite extrémité distale formant un couplage mécanique (59) avec une prise de force ; le couplage mécanique comprenant de préférence un profil cannelé (59).

8. Le joint universel (7) selon l'une ou plusieurs des revendications précédentes, dans lequel le corps de fermeture (31) comprend :
une paroi inférieure (31.1), opposée à la première fourche (7A), le moyeu (21) s'étendant à travers la paroi inférieure (31.1) ; et
une paroi périmétrique annulaire (31.2) entourant la chambre à bain d'huile (30), coaxiale avec le moyeu (21) et connectée de manière étanche à la bride de fermeture (29).

9. Le joint universel (7) selon l'une ou plusieurs des revendications précédentes, dans lequel la bride de fermeture (29) et le corps de fermeture (31) sont unis l'une à l'autre par une pluralité de vis (37), de préférence associés avec des rondelles d'étanchéité (39).

10. Le joint universel (7) selon l'une ou plusieurs des revendications précédentes, dans lequel la chambre à bain d'huile (30) est fermée de manière étanche par un joint d'étanchéité (36) logé dans un logement du corps de fermeture (31) et entourant le moyeu (21).

11. Le joint universel (7) selon l'une ou plusieurs des revendications précédentes, dans lequel le moyeu (21) comprend un profil cannelé (59) formant un couplage par torsion avec une prise de force, un organe de verrouillage (61) étant prévu pour coupler le profil cannelé à une prise de force.

12. Le joint universel (7) selon l'une ou plusieurs des revendications précédentes, comprenant un capteur de température (77).

13. Le joint universel (7) selon la revendication 12, dans lequel le capteur de température (77) est appliqué à l'extérieur de la chambre à bain d'huile (30) et est apte à mesurer la température d'une paroi délimitant la chambre à bain d'huile (30), le capteur de température (77) étant de préférence un capteur apte à mesurer la température de la paroi délimitant la chambre à bain d'huile (30) sans contact, ou étant en contact avec la paroi délimitant la chambre à bain d'huile (30) ou avec l'huile contenue dans la chambre à bain d'huile (30).

14. Le joint universel (7) selon l'une ou plusieurs des revendications précédentes, comprenant un détecteur de vibrations (87), ou un détecteur de la rotation relative entre le moyeu et la première fourche (7A) ; le détecteur de vibrations (87) étant de préférence d'un seul tenant avec un composant du joint universel (7), en particulier avec la première fourche (7A) ; et le détecteur de la rotation relative étant de préférence apte à mesurer la vitesse relative entre le moyeu (21) et la première fourche (7A).

15. Un système comprenant un joint universel (7) selon l'une ou plusieurs des revendications précédentes et un capot de protection (13) pour le joint universel (7), apte à être fixé à un composant stationnaire.

16. Le système selon la revendication 15, comprenant une capteur de température (77) fixé au capot de protection (13) et apte à mesurer la température d'une paroi du joint universel (7) sans contact, de préférence un capteur infrarouge.

17. Le système selon la revendication 15 ou 16, comprenant un capteur de vitesse fixé sur le capot de protection (13) et apte à détecter une différence de vitesse de rotation entre le moyeu (21) et la première fourche (7A).

18. Un arbre d'entraînement (1) comprenant :
- un arbre téléscopique (3) avec une première extrémité et une deuxième extrémité ;
- un premier joint universel (5) associé avec la première extrémité de l'arbre téléscopique (3) ; et
- un deuxième joint universel (7) associé avec la deuxième extrémité de l'arbre téléscopique ;
dans lequel l'un desdits premier joint universel (5) et deuxième joint universel (7) est un joint universel selon l'une ou plusieurs des revendications 1 à 14.

19. L'arbre d'entraînement (1) selon la revendication 18, dans lequel la deuxième fourche (7B) est connectée en torsion à l'arbre téléscopique (3) et le moyeu (21) forme un couplage pour une prise de force.
